(19) Europäisches Patentamt / European Patent Office / Office européen des brevets

(11) **EP 3 354 180 B1**

(12) **EUROPEAN PATENT SPECIFICATION**

(45) Date of publication and mention
of the grant of the patent:
**06.05.2020 Bulletin 2020/19**

(51) Int Cl.:
***A47L 9/28*** *(2006.01)*    ***G05D 1/02*** *(2020.01)*

(21) Application number: **17186058.8**

(22) Date of filing: **11.08.2017**

(54) **AUTOMATIC CLEANER AND CONTROLLING METHOD OF THE SAME**

AUTOMATISCHER REINIGER UND STEUERUNGSVERFAHREN DAFÜR

ROBOT NETTOYEUR ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2017 TW 106103119
20.03.2017 TW 106109150
31.03.2017 TW 106110983**

(43) Date of publication of application:
**01.08.2018 Bulletin 2018/31**

(73) Proprietor: **Hobot Technology Inc.
Chupei City, Hsinchu County 30274 (TW)**

(72) Inventor: **CHAO, Chi-Mou
302 Hsinchu County (TW)**

(74) Representative: **Lang, Christian
LangPatent Anwaltskanzlei
Ingolstädter Straße 5
80807 München (DE)**

(56) References cited:
**WO-A1-2016/148743      US-A- 5 804 942
US-A1- 2005 237 388      US-A1- 2005 251 312
US-A1- 2006 217 854**

**Description**

**BACKGROUND OF THE INVENTION**

**Field of the Invention**

The present invention relates to an automatic cleaner and a controlling method of the same, and more particularly to an automatic cleaner and a controlling method of the same which correct the path of the automatic cleaner on the basis of a wall.

**Related Art**

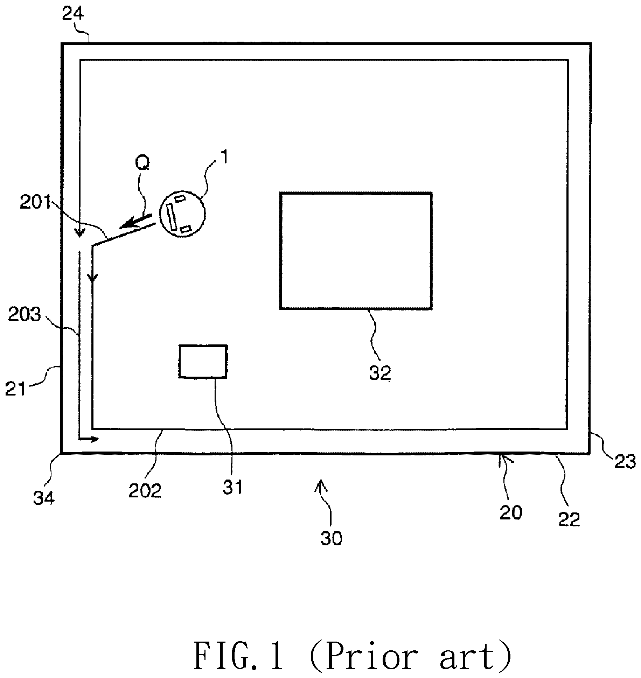

According to conventional art, when an automatic cleaner is used to clean the floor of a room, it uses an algorithm to carry out the path planning, preferably a zigzag path, so as to reduce the area that has not been cleaned or wiped. For example, U.S.A. Patent No. US 7515991B2 proposes a zigzag path planning method. Fig. 1 shows a schematic diagram of a path planned by a conventional cleaning robot. As shown in Fig. 1, the room 30 to be cleaned is surrounded by walls 20 which include four wall sections 21, 22, 23 and 24. In the room 30, the obstacles 31, 32 such as chairs, sofas are placed. A cleaning robot 1 is placed at any position in the room 30. At first, the cleaning robot 1 senses a cleaning area and moves forward in its current direction along the path 201 to a surface of the walls 20. Next, the cleaning robot 1 moves around the room 30 by travelling along the walls 20 by way of the paths 202, 203. During the travelling of the cleaning robot 1, the cleaning area is determined; the map database is established; and then the obtained map database is stored in a memory of the control device.

During the travelling of the cleaning robot 1, the accumulated error of its orientation angle occurs. Thus, Patent No. US 7515991B2 proposes a correction method. According to the correction method, a self-propelled cleaning device stores map database having indicators "wall" detected while it was traveling and then corrects its orientation angle according to the orientation angle that is computed from its traveling track and the angle of the wall stored in the map database. Thus, the accuracy of the orientation angle is increased during cleaning.

A commercially available cleaning robot (LG, LrV5900) is equipped with an image sensor which obtains the image of a ceiling and identifies the lines of the ceiling, and then it constantly uses the ceiling image to correct and calculate the coordinates of longitude and latitude of the robot (respectively being vertical to and parallel with the wall) in a room. Since the cleaning robot travels on a zigzag path based on the calculated coordinates to clean the room, the accumulated error of its orientation angle may be avoided. However, the imaging system of the cleaning robot needs a better hardware to analyze the image and calculate, so that its cost is high. The other commercially available cleaning robot (irobot 980) captures the images of furniture and identifies the sharp points of the furniture to calculate the coordinates of longitude and latitude of the robot (respectively being vertical to and parallel with the wall) in a room. As described above, the cost of its image system however is also high.

Another commercially available cleaning robot (Neato) is equipped with a light detection and ranging device (LIDAR) which measures distance to a target by illuminating that target with a pulsed laser light and then measuring the reflected pulses with a sensor. The measuring range of the LIDAR may be up to 6 meters (meter). The cleaning robot continuously rotates the head of LIDAR to measure the distance to the walls around the room, and records the measured data as a map. The cleaning robot then walks back and forth on the basis of the map. However, the cost of LIDAR is expensive.

Another commercially available cleaning robot (mint) is equipped with a Polaris system that projects a spot to the ceiling of a room, and an image device of the Polaris system detects the spot to calculate the coordinates of the robot in the room. Since the cleaning robot travels on a zigzag path obtained on the basis of the calculated coordinates, the accumulated error of its orientation angle may be avoided. However, the Polaris imaging system of the cleaning robot needs a better hardware to analyze the image and calculate the path, so that its cost is also high.

In patent application publication US 2006/0217854 A1 an automatic cleaner having the features of the preamble of claim 1 and a controlling method having the features of the preamble of claim 7 is described. Further automatic cleaners are known from patent specification US 5804942 A and patent application publications US 2005/0251312 A1, US 2005/0237388 A1 and WO 2016/148743 A1.

**SUMMARY OF THE INVENTION**

It is an objective of an embodiment of the present invention to provide an automatic cleaner and its controlling method which corrects its path on the basis of a wall. It is an objective of an embodiment of the present invention to provide an automatic cleaner and its controlling method which uses a plurality of local maps to update or extend a map database.

In order to achieve said objective, the present invention provides an automatic cleaner having the features of claim 1 as well as a controlling method having the features of claim 7. The automatic cleaner comprises a distance sensor, a control module and a travelling device. The control module has a gyro and is electrically connected to the distance sensor and the travelling device. The travelling device is used to move the automatic cleaner from a first position to a second position. The distance sensor is used to measure a plurality of pitches $Y(t)$ between the automatic cleaner and a wall at a plurality of different time points $t$. The control module is used to calculate a plurality of travel distances $X(t)$ of the travelling device at the different time points $t$. In the second position, a deviation angle $A$ between the traveling direction of the automatic cleaner and the extending direction of the wall is determined on the basis of the pitches $Y(t)$ and the travel distances $X(t)$.

In one embodiment, the control module calculates a regression line $L$ by linear regression through a set of data points of the travel distances $X(t)$ and the pitches $Y(t)$, and then obtains the deviation angle $A$ from the regression line $L$.

In one embodiment, the control module further calculates an orientation angle $Q$ and corrects the orientation angle $Q$ according to the deviation angle $A$. In one embodiment, the control module corrects the orientation angle $Q$ further according to a first equation: the orientation angle after correction $Q$ = (the orientation angle before correction $Q$ - the deviation angle $A$). In one embodiment, the control module corrects the orientation angle $Q$ further according to a second equation: the orientation angle after correction $Q$ = (the orientation angle before correction $Q$ - a difference angle $Aa$), and the deviation angle $A$ is greater than the difference angle $Aa$.

In one embodiment, the control module comprises a motor module and an encoder. The motor module is connected to the travelling device. The encoder is electrically connected to the motor module and the travel distances $X(t)$ are obtained according to an operation signal of the motor module so that the automatic cleaner may be navigated in accordance with the travel distances $X(t)$ and the orientation angle $Q$. In one embodiment, the gyro is used to measure the angular velocity of the automatic cleaner and then integrate the angular velocity with respect to time, so that the control module may obtain the orientation angle $Q$ from an integral angle $iA$.

In one embodiment, the predetermined angle $G$ is 360 degrees. The travelling device travels forward so that the automatic cleaner is moved from the first position to the second position. The travelling device travels backward so that the automatic cleaner is moved from the second position to the third position.

In one embodiment, the control module further rotates the automatic cleaner by a predetermined angle $G$ and then controls the travelling device to move the automatic cleaner from the second position to a third position. After the automatic cleaner is rotated by a predetermined angle $G$, a plurality of pitches $Y1(t)$ between the automatic cleaner and the wall are obtained at a plurality of different time points $t$ by using the distance sensor. After the automatic cleaner is rotated by a predetermined angle $G$, the travel distances $X1(t)$ of the automatic cleaner is calculated at the different time points $t$. In the third position, a deviation angle $A1$ between the traveling direction of the automatic cleaner and the extending direction of the wall is determined on the basis of the pitch $Y1(t)$ and the travel distances $X1(t)$. And, the constant $K$ of the gyro is corrected according to the deviation angle $A$ and the deviation angle $A1$.

According to an embodiment of the present invention, a controlling method is provided which is applied to an automatic cleaner comprising a distance sensor, a control module having a gyro and a travelling device. The controlling method comprises the following steps of: moving the automatic cleaner from a first position to a second position; using the distance sensor to measure a plurality of pitches $Y(t)$ between the automatic cleaner and a wall at a plurality of different time points $t$; using the control module to calculate a plurality of travel distances $X(t)$ of the travelling device at the different time points $t$; determining a deviation angle $A$ between the traveling direction of the automatic cleaner and the extending direction of the wall on the basis of the pitches $Y(t)$ and the travel distances $X(t)$ in the second position.

In one embodiment, the step of determining a deviation angle $A$ comprises the step of calculating a regression line $L$ by linear regression through a set of data points of the travel distances $X(t)$ and the pitches $Y(t)$, and then obtaining the deviation angle $A$ from the regression line $L$.

In one embodiment, the controlling method further comprises the following steps of: using the control module to calculate an orientation angle $Q$ and correct the orientation angle $Q$ according to the deviation angle $A$. In one embodiment, the step of correcting the orientation angle $Q$ according to the deviation angle $A$ comprises the step of correcting the orientation angle $Q$ according to an equation: the orientation angle after correction $Q$ = the orientation angle before correction $Q$ - a difference angle $Aa$, and the deviation angle $A$ is greater than the difference angle $Aa$.

In one embodiment, the step of correcting the orientation angle $Q$ according to the deviation angle $A$ comprises the steps of determining whether the orientation angle $Q$ has been corrected; correcting the orientation angle $Q$ according to a first equation: the orientation angle after correction $Q$ = the orientation angle before correction $Q$ - a deviation angle $A$, if the orientation angle $Q$ has not been corrected yet; determining whether the deviation angle $A$ is smaller than a threshold value; correcting the orientation angle $Q$ further according to a second equation: the orientation angle after correction $Q$ = the orientation angle before correction $Q$ - the difference angle $Aa$ smaller than the deviation angle $A$, if the orientation angle $Q$ has been corrected and the deviation angle $A$ is smaller than the threshold value; and not correcting the orientation angle $Q$ if the deviation angle $A$ is greater than the threshold value.

In one embodiment, the controlling method further comprises the following steps of: rotating the automatic cleaner by a predetermined angle G; moving the automatic cleaner from the second position to a third position; using the distance sensor to obtain a plurality of pitches Y1(t) between the automatic cleaner and the wall at a plurality of different time points t after the automatic cleaner is rotated by the predetermined angle G; calculating the travel distance of the automatic cleaner at the different time points t after the automatic cleaner is rotated by the predetermined angle G; determining a deviation angle A1 between the traveling direction of the automatic cleaner and the extending direction of the wall based on the pitch Y1(t) and the travel distances X1(t) in the third position; and correcting the constant K of the gyro according to the deviation angle A and the deviation angle A1.

In one embodiment, the predetermined angle G is 360 degrees. The step of moving the automatic cleaner from the first position to the second position comprises the step of making the travelling device travel forward. The step of moving the automatic cleaner from the second position to the third position comprises the step of making the travelling device travel backward.

According to an embodiment of the present invention, a controlling method is provided which is applied to an automatic cleaner. The controlling method comprises the following steps of: starting an automatic cleaner to look for a starting point; moving the automatic cleaner by use of the control method as described above; using the distance sensor of the automatic cleaner to measure the surrounding environment of the automatic cleaner at different time points so that a plurality of local maps are obtained; determining a zigzag path based on the local maps and then traveling on the zigzag path; and updating a map database based on the local maps and storing the map database in a memory of the automatic cleaner.

According to an embodiment of the present invention, an automatic cleaner may obtain the deviation angle A between it and a wall by continuously measuring the pitches between the automatic cleaner and the wall, and then use the deviation angle A to correct the orientation angle Q of the automatic cleaner so that the actual path of the automatic cleaner does not shift away from the desired path. In one embodiment, a ranging laser IC, rather than a LIDAR, may be used. Since the cost of ranging laser IC is lower than a LIDAR, the cost of the automatic cleaner is reduced.

## BRIEF DESCRIPTION OF THE DRAWINGS

The foregoing features, aspects, and advantages of the present disclosure will now be described with reference to the drawings of preferred embodiments that are intended to illustrate and not to limit the disclosure.

Fig. 1 shows a schematic diagram of a path planned by a conventional cleaning robot.

Fig. 2A shows a top view of the automatic cleaner according to an embodiment of the present invention when it travels along the wall.

Fig. 2B shows a bottom view of the automatic cleaner of the embodiment of Fig. 2A.

Fig. 2C shows a side view of the automatic cleaner of the embodiment of Fig. 2A.

Fig. 3 shows a functional block diagram of an automatic cleaner according to an embodiment of the present invention.

Fig. 4 is a schematic view showing a part of an actual path of the automatic cleaner according to an embodiment of the present invention.

Fig. 5 shows the relationship between the travel distances X(t) and the pitches Y(t) between a wall and an automatic cleaner according to an embodiment of the present invention.

Fig. 6 shows a flow chart of a control method according to an embodiment of the present invention.

Fig. 7 shows a schematic diagram of a path planed by an automatic cleaner according to an embodiment of the present invention.

Fig. 8 shows a flow chart of a control method for planning a path according to an embodiment of the present invention.

Fig. 9A shows a schematic view of a part of an actual path of an automatic cleaner according to another embodiment of the present invention.

Fig. 9B shows a schematic view of a part of the actual path of an automatic cleaner according to another embodiment of the present invention.

Figs. 10A-10B show a flow chart of a control method which can correct an orientation angle of a gyro according to an embodiment of the present invention.

## DETAILED DESCRIPTION OF THE INVENTION

These and other embodiments of the present disclosure will also become readily apparent to those skilled in the art from the following detailed description of preferred embodiments having reference to the attached figures; however, the disclosure is not limited to any particular embodiment(s) disclosed herein. Accordingly, the scope of the present disclosure is intended to be defined only by reference to the appended claims.

According to an embodiment of the present invention, the automatic cleaner 200 establishes a map database while traveling, and plans a cleaning path or route based on a plurality of local maps. It further continuously updates the map database while traveling and cleaning the room until the entire floor 102 of a room is cleaned. In addition, the automatic cleaner 200 corrects its orientation angle Q on the basis of a wall at all times while walking, so that the automatic cleaner 200 can clean a room by travelling in directions parallel or perpendicular to a wall along a zigzag path so as to improve cleaning efficiency. Hereinafter, specific embodiments of the present invention will be further described.

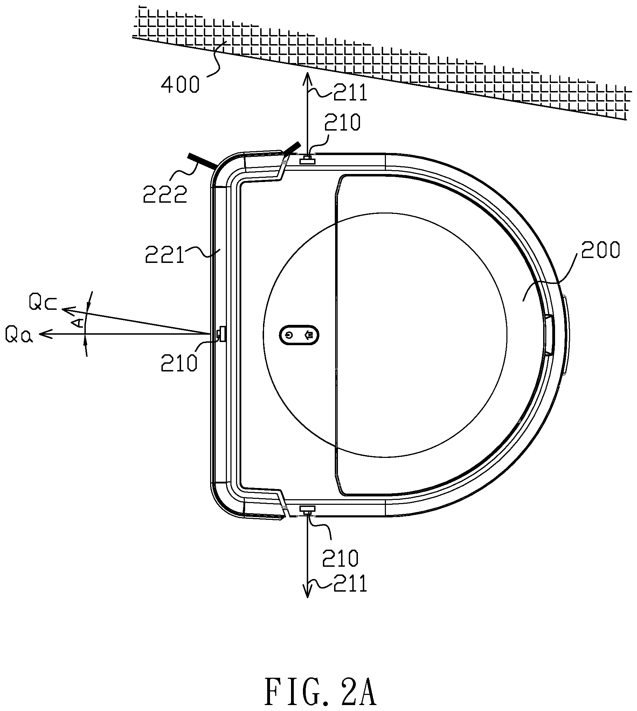

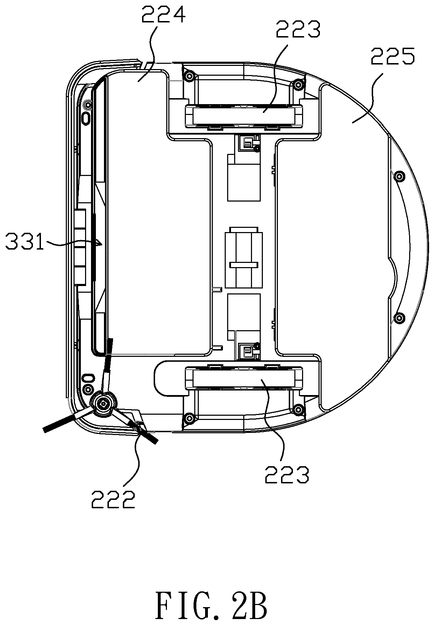

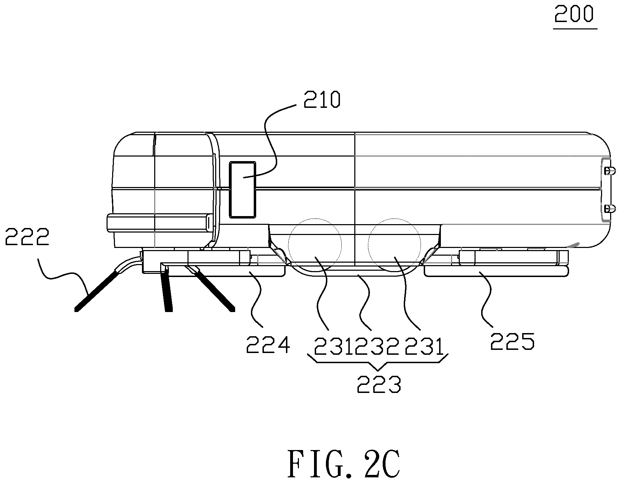

Fig. 2A shows a top view of the automatic cleaner according to an embodiment of the present invention when it travels along the wall. Fig. 2B shows a bottom view of the automatic cleaner of the embodiment of Fig. 2A. Fig. 2C shows a side view of the automatic cleaner of the embodiment of Fig. 2A. As shown in Figs. 2A, 2B and 2C, the automatic cleaner 200 includes at least one distance sensor 210, a bumper bar 221, at least one side brush 222, a travelling device 223, and a cleaning means 224 and 225. The bumper bar 221 is disposed in front of the automatic cleaner 200 for sensing a collision event with an obstacle. The side brush 222 extends downwardly to sweep the dust on the ground into a suction port 331. The cleaning means 224, 225 may comprise a cleaning cloth disposed on the bottom side and facing down to wipe the floor. As shown in Fig. 2C, the travelling device 223 may be a pulley device comprising two wheels 231 and a belt 232, and the belt 232 is connected between the wheels 231.

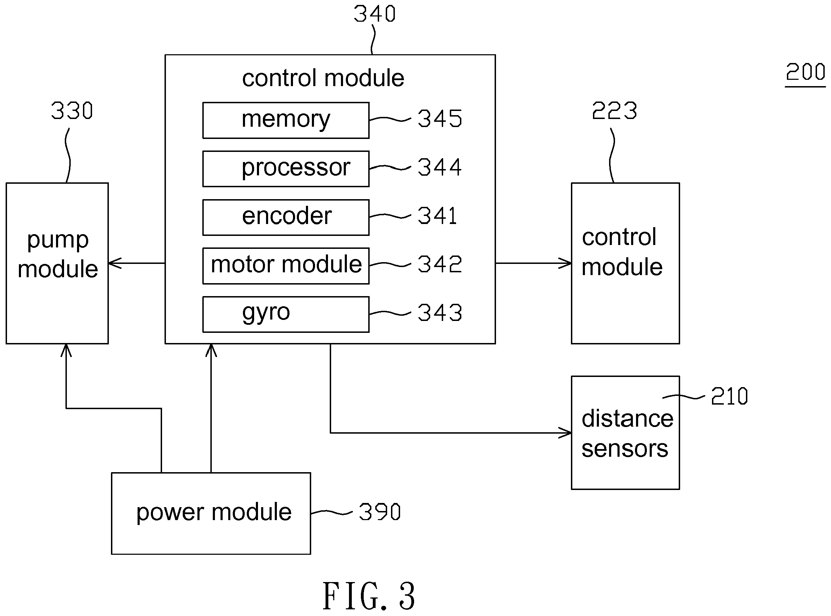

Fig. 3 shows a functional block diagram of an automatic cleaner according to an embodiment of the present invention. As shown in Fig. 3, in the present embodiment, the automatic cleaner 200 further includes a pump module 330, a control module 340, and a power module 390. The power module 390 is used to provide a power supply to the pump module 330 and the control module 340. The pump module 330 drives a vacuum (not shown) to suck up dust from the suction port 331 and then collect the dust into a dust bag (not shown). The distance sensor 210 is electrically connected to the control module 340 for transmitting a distance data to the control module 340. The control module 340 includes an encoder 341, a motor module 342, a gyro 343, a processor (CPU) 344, and a memory 345. The motor module 342 drives the travelling device 223, so that the automatic cleaner 200 can move back and forth or rotates to the left or right. More specifically, the motor module 342 connects the wheels 231 and drives the wheels 231 to rotate so that the belt 232 is rotated. The motor module 342 is electrically connected to an encoder 341 which calculates a walking distance or a turning angle on the basis of an operation signal from the motor module 342. The gyro 343 of the control module 340 is used to measure the angular velocity ($\omega$) of the automatic cleaner 200 and integrate the angular velocity to obtain the integral angle (iA) of the machine, as shown in the following equation eq1. The encoder 341 generates inertial navigation in accordance with at least one of a travel distance, a turning angle and an integration angle (iA), and computes a zigzag path.

$$iA = \int K\omega dt \qquad\qquad eq1$$

where iA is an integral angle, K is a constant of the gyro, $\omega$ is angular velocity, and t is time.

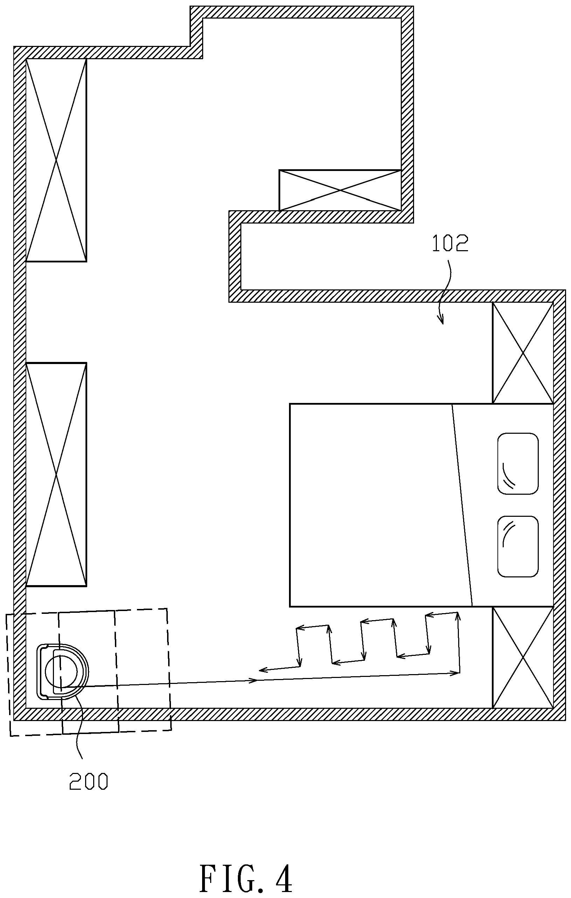

However, since the orientation angle of the automatic cleaner 200 is obtained by integration, the error of the orientation angle is accumulated over time. The actual path of the machine may incline and be deviated away from the originally expected path. Fig. 4 is a schematic view showing a part of an actual path of the automatic cleaner according to an embodiment of the present invention. As shown in Fig. 4, the automatic cleaner 200 is placed on the floor 102 of a room. The actual path on which the automatic cleaner 200 travels is deviated away from the originally expected path due to the accumulated error. Since the coordinates or the orientation angle of the automatic cleaner 200 is deviated, the automatic cleaner 200 cannot travel in a direction substantially parallel to or perpendicular to the wall and then the map database created by it is also deviated.

More specifically, the automatic cleaner 200 uses gyro 343 detects its angular velocity while it is traveling. Its encoder 341 uses the detected traveling distance and angular velocity to obtain the orientation angle before correction Q from the actual path. Due to the error accumulated over time, the orientation angle before correction Q is inconsistent with the originally desired orientation angle Q (i.e., the extension direction Qc of the wall 400). As a result, the automatic cleaner 200 travels in the direction not parallel to the extension direction of the wall 400.

In one embodiment, the distance sensors 210 are disposed on one edge of the automatic cleaner 200. As shown in Fig. 2A, in one embodiment, the distance sensors 210 are respectively provided on both the side of and the front of the automatic cleaner 200. In one embodiment, the distance sensor 210 is not a LIDAR and may be a laser integrated circuit (IC) that emits a laser beam 211 to measure the distance between the automatic cleaner 200 and the wall 400. The distance sensor 210 further measures the pitches Y(t) between the automatic cleaner 200 and the wall 400 at a plurality of different time points t. The control module 340 calculates a plurality of travel distances X(t) of the travelling device 223 at these different time points t and stores the above data into its memory. A regression line L is calculated by linear regression through a set of data points of the travel distances X(t) and the pitches Y(t), and then the angle between the regression line L and the X axis is also calculated which is the deviation angle A. The deviation angle A may be deemed to be the angle between the traveling direction of the automatic cleaner 200 and the extending direction of the wall 400.

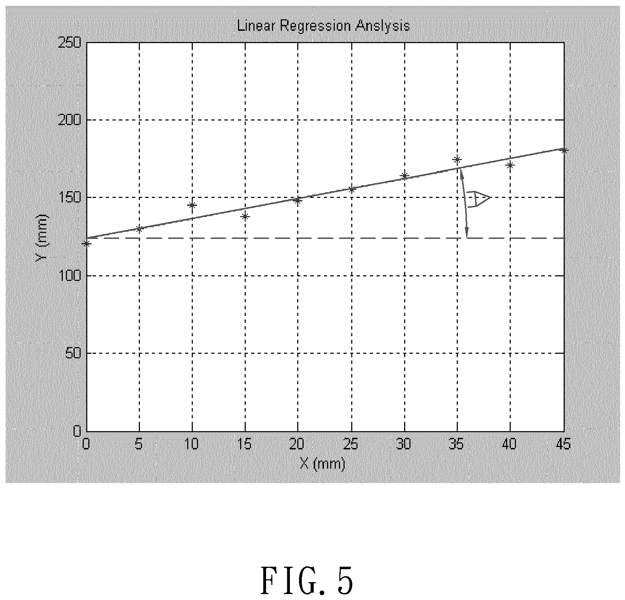

A more detailed description of the algorithm is provided below. Fig. 5 shows the relationship between the travel distances X(t) and the pitches Y(t) between a wall and an automatic cleaner according to the embodiment of Fig. 2. For example, the above data may be plotted on a graph. As shown in Fig. 5, the set of data points of the travel distances X(t) and the pitches Y(t) obtained at the different time points t are plotted on the graph of Fig. 5. A regression line L is calculated by linear regression through a set of data points, and then the angle between the regression line L and the X axis is also calculated so that the deviation angle A is obtained.

The step of correcting the orientation angle Q of the automatic cleaner 200 is descripted below. The control module 340 of the automatic cleaner 200 rotates the body by a deviation angle A so that the traveling direction of the automatic cleaner 200 is parallel to the extending direction Qc of the wall 400. At this time, the control module 340 corrects the orientation angle Q. The orientation angle after correction Q = (the orientation angle before correction Q - the deviation angle A) = direction Qc. Then, the orientation angle after correction Q is also stored in the control module 340. As a result, the automatic cleaner 200 can clean a room by travelling in directions parallel or perpendicular to a wall along a zigzag path. It is to be understood that, although the example is described that the traveling direction of the automatic cleaner 200 is parallel to the reference object, the parallel direction is not limited by the present invention, which may be a vertical direction in another example. According to another product design, a variety of predetermined direction as opposed to the parallel direction may also be used. That is, the travelling direction of the automatic cleaner 200 may be maintained at a predetermined angle with respect to the reference object.

In the above embodiment, the orientation angle Q may be over corrected sometimes if the calculated deviation angle A is too large. Therefore, it is preferable that the correction process can be performed at different time points in a time sharing manner. The difference angle Aa used at each correction step is smaller than the deviation angle A, so that the orientation angle Q is gradually approached to the desired orientation angle Qc. In this way, it is possible to avoid the excessive rotation of the automatic cleaner 200 or the like.

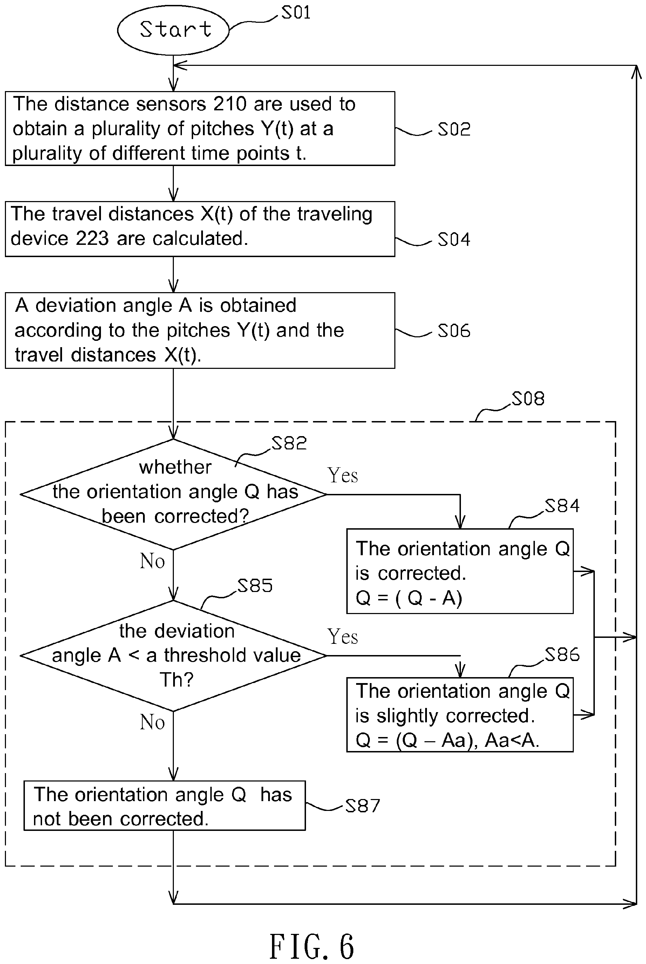

Fig. 6 shows a flow chart of a control method according to an embodiment of the present invention. When the automatic cleaner 200 is started, it performs an initial positioning step (Step S01). After the initial positioning step, it then performs a control method according to an embodiment of the present invention while walking. As shown in Fig. 6, the control method of the automatic cleaner 200 includes the following steps.

Step S02: The distance sensors 210 are used to obtain a plurality of pitches Y(t) between the automatic cleaner 200 and a wall 400 at a plurality of different time points t.

Step S04: At these different time points t, a plurality of travel distances X(t) of the traveling device 223 are calculated.

Step S06: A deviation angle A between the traveling direction of the automatic cleaner 200 and the extending direction of the wall 400 is obtained according to the pitches Y(t) and the travel distances X(t). More specifically, the regression line L is calculated by linear regression through a set of data points of the travel distances X(t) and the pitches Y(t), and then the angle between the regression line L and the axis X is obtained as the deviation angle A.

Step S08: The orientation angle Q is corrected according to the deviation angle A.

In one embodiment, the orientation angle Q can be slightly corrected at different time points in a time-sharing manner in order to prevent the overcorrection. Specifically, the process of the above step S08 may include the following steps.

Step S82: It is judged whether or not the orientation angle Q has been corrected. If so, the process proceeds to step S84. If not, the process proceeds to step S85.

Step S84: The orientation angle Q of the automatic cleaner 200 is corrected in accordance with the following equation: the orientation angle after correction Q = (the orientation angle before correction Q - the deviation angle A). After executing step S84, the process returns to step S02.

Step S85: It is judged whether or not the deviation angle A is smaller than a threshold value Th. If so, the process proceeds to step S86. If not, the process proceeds to step S87.

Step S86: The orientation angle Q of the automatic cleaner 200 is slightly corrected in accordance with the following equation: the orientation angle after correction Q = (the orientation angle before correction Q - a difference angle Aa), where the difference angle Aa is smaller than the deviation angle A. After executing step S86, the process returns to step S02.

Step S87: The orientation angle Q of the automatic cleaner 200 is not corrected, if the deviation angle A exceeds the threshold value Th. This indicates that the wall 400 is inclined and is not an orthogonal wall, and the automatic cleaner 200 determines not to correct the orientation angle Q. After executing step S87, the process returns to step S02.

When the automatic cleaner 200 is started, the initial positioning step is performed. After the initial positioning step, the orientation angle Q is first corrected and the inertial navigation is performed by using the encoder 341 and the gyro 343. While the automatic cleaner 200 is walking, it may have problems with wheel slip and the accumulated error of the orientation angle, so that the orientation angle may be shifted away. According to the present embodiment, the automatic cleaner 200 continuously determines the deviation angle between the traveling direction of the automatic cleaner 200 and the nearby wall 400 when traveling. When it is judged that there is a deviation angle A, the automatic cleaner 200 is rotated to reduce the deviation angle A, and the orientation angle Q is also slightly corrected by a small difference angle Aa and then stored in the automatic cleaner 200. However, when the wall 400 is inclined as opposed to vertical or parallel, the deviation angle A will be too large. Therefore, the automatic cleaner 200 determines not to correct the orientation angle Q stored in its software if the deviation angle A is too large. As shown in Fig. 2A, when the automatic cleaner 200 travels in the room, the distance sensor 210 measures the deviation angle A between the automatic cleaner 200 and the wall 400 being the wall of the kitchen cabinet, the bed, or the like. Then, the automatic cleaner 200 corrects its the orientation angle Q by using the deviation angle A, so that it can move in the direction parallel or perpendicular to the wall 400 and travel on a zigzag path. Accordingly, the room can be efficiently cleaned.

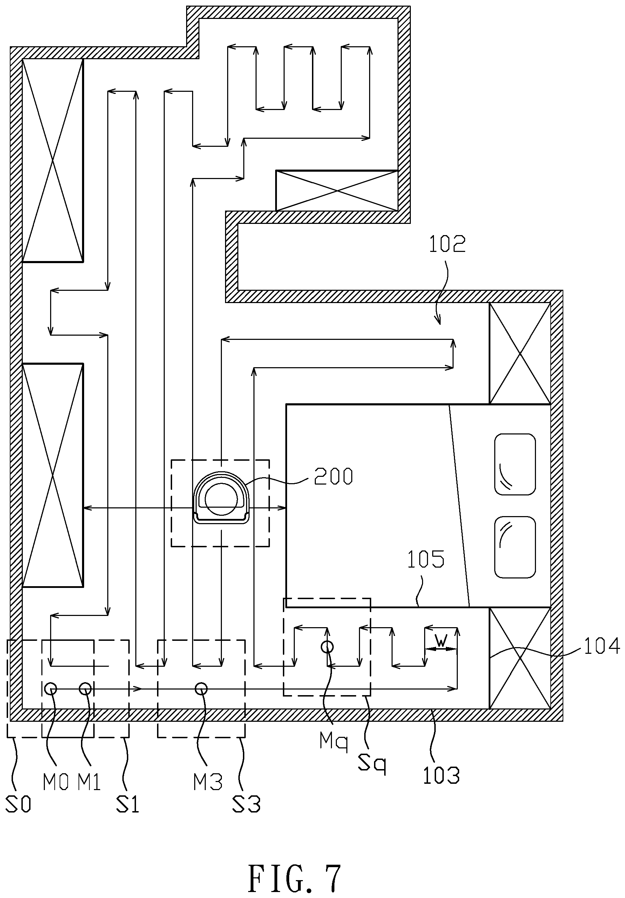

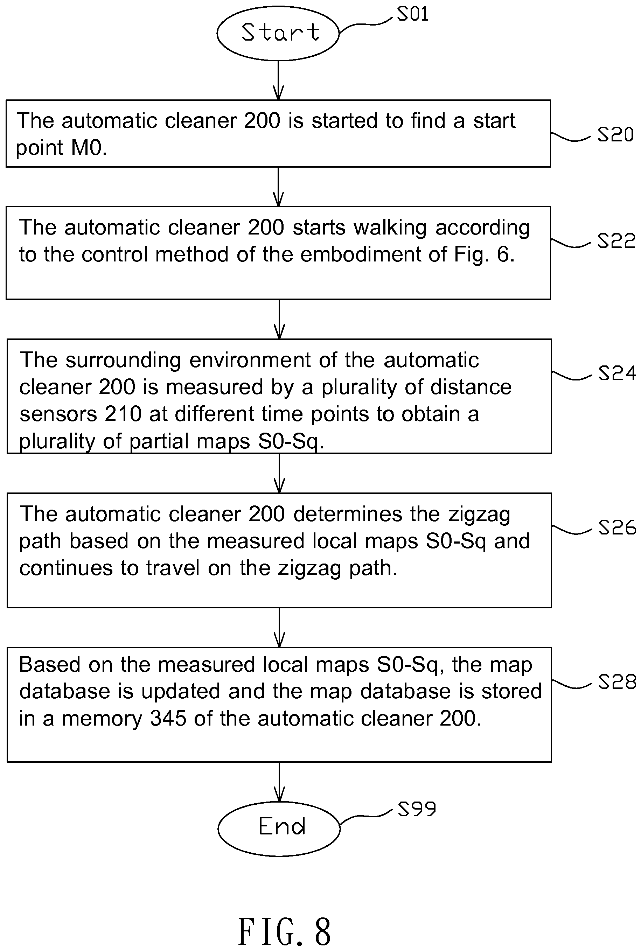

Fig. 7 shows a schematic diagram of a path planed by an automatic cleaner according to an embodiment of the present invention. Fig. 8 shows a flow chart of a control method for planning a path according to an embodiment of the present invention. As shown in Figs. 7 and 8, a path planning method according to an embodiment of the present invention includes the following steps.

Step S20: The automatic cleaner 200 is started. When the automatic cleaner 200 is started, the initial positioning step is performed to find the start point M0. In one embodiment, the automatic cleaner 200 may be placed at an arbitrary position as the starting point M0. In one embodiment, the automatic cleaner 200 conducts a search for a wall, and the position at which the wall is found is deemed to be the starting point M0. In one embodiment, the automatic cleaner 200 searches the corner formed by two walls and deems the position of the found corner to be the starting point M0.

Step S22: The automatic cleaner 200 starts walking according to the control method of the embodiment of Fig. 6 described above.

Step S24: The surrounding environment of the automatic cleaner 200 is measured by a plurality of distance sensors 210 at different time points t so as to obtain a plurality of local maps SO-Sq. More specifically, at the beginning, the surroundings environment of the automatic cleaner 200 is measured by the distance sensors 210 to obtain a local map S0. The local map S0 is a local area in the floor 102, which can be represented by a two-dimensional array $S0(i, j)$. The size of i and j is determined by the maximum distance that the distance sensor 210 can sense. The automatic cleaner 200 travels along the wall 103 to point M1, performs the correction of the direction angle Q in accordance with the control method of Fig. 6 while walking, and measures the surrounding environment of the automatic cleaner 200 at point M1 to obtain a local map S1.

Step S26: The automatic cleaner 200 determines a zigzag path based on the measured local maps SO-Sq and continues to travel on the zigzag path. In more detail, the automatic cleaner 200 determines a zigzag path based on the known local maps SO-Sq and continues to travel to point $M_{q+1}$ on the zigzag path along the horizontal or vertical axis. It then corrects the orientation angle Q in accordance with the control method of Fig. 6 while walking, and continuously obtains the latest local map $S_{q+1}$. The automatic cleaner 200 moves forward on the zigzag path until it meets an obstacle, then turns 90 degrees to the left or right. As shown in Fig. 7, when the automatic cleaner 200 encounters the wall 104, it turns 90 degrees to the left and moves forward. When it encounters the wall 105, it again turns 90 degrees to the left and moves forward. It travels a predetermined distance W and then turns 90 degrees to the left. Accordingly, the automatic cleaner 200 can travel on the zigzag path.

Step S28: Based on the measured local maps SO-Sq, the map database is updated and the map database is stored in the memory 345 of the automatic cleaner 200. The automatic cleaner 200 integrates all of the local maps SO-Sq to update and expand the map database map (i, j). The longer the automatic cleaner 200 travels along the horizontal axis, the larger the i value can be detected. The longer the automatic cleaner 200 travels along the vertical axis, the larger the j value can be detected. Therefore, the local map S1 contains the partial information unknown by the local map S0, and the local map $S_{q+1}$ contains the partial information unknown by the local map Sq. The automatic cleaner 200 integrates the measured and known local maps to update and expand the map database map (i, j). In addition, in Fig. 7, the rightward and upward directions may be deemed to be positive and the leftward and downward directions may be deemed to be negative.

As described above, the automatic cleaner 200 obtains a plurality of local maps while walking, and updates and expands the map database map (i, j) based on the local maps. According to an embodiment of the present invention, there is an advantage in that the automatic cleaner 200 can create the map database and determine the cleaning route based on the obtained local maps while traveling. The map database is continuously expanded during the cleaning process until the entire room floor 102 is cleaned. Before cleaning operation, the automatic cleaner 200 does not need to circle around the room to build the map, so that the time is reduced. In addition, while it is traveling, its direction angle Q is corrected in accordance with the aforementioned method. As a result, it can move in the direction parallel or perpendicular to the wall 400 and travel on a zigzag path, so that the room can be efficiently cleaned.

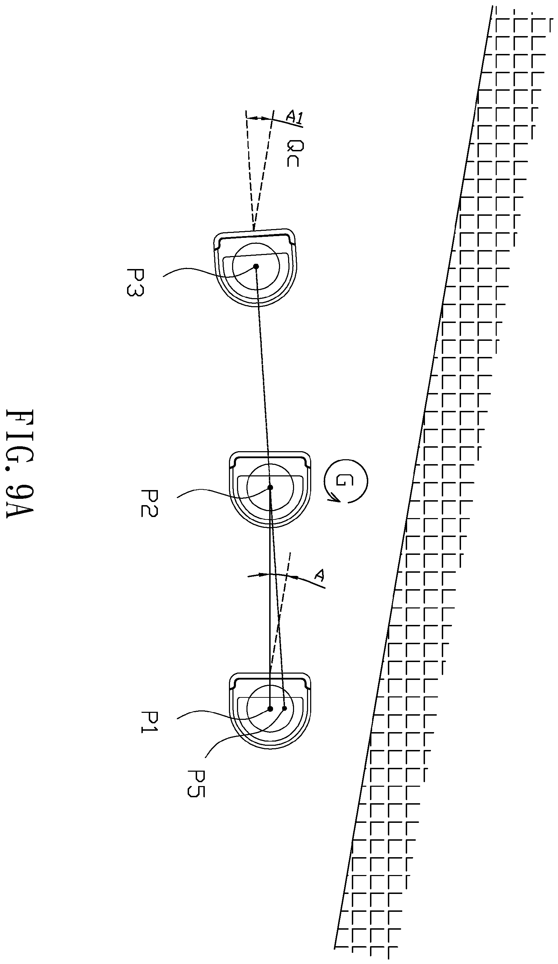

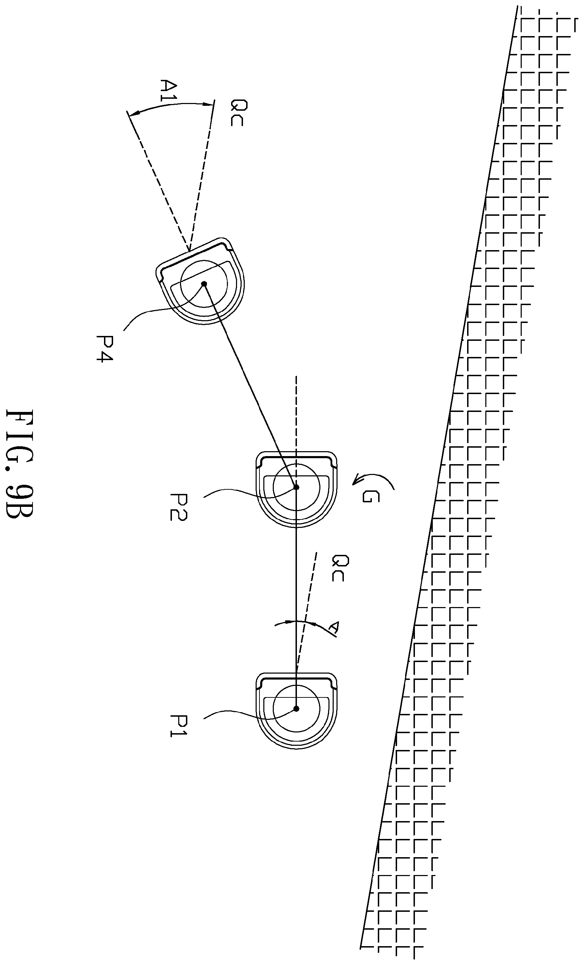

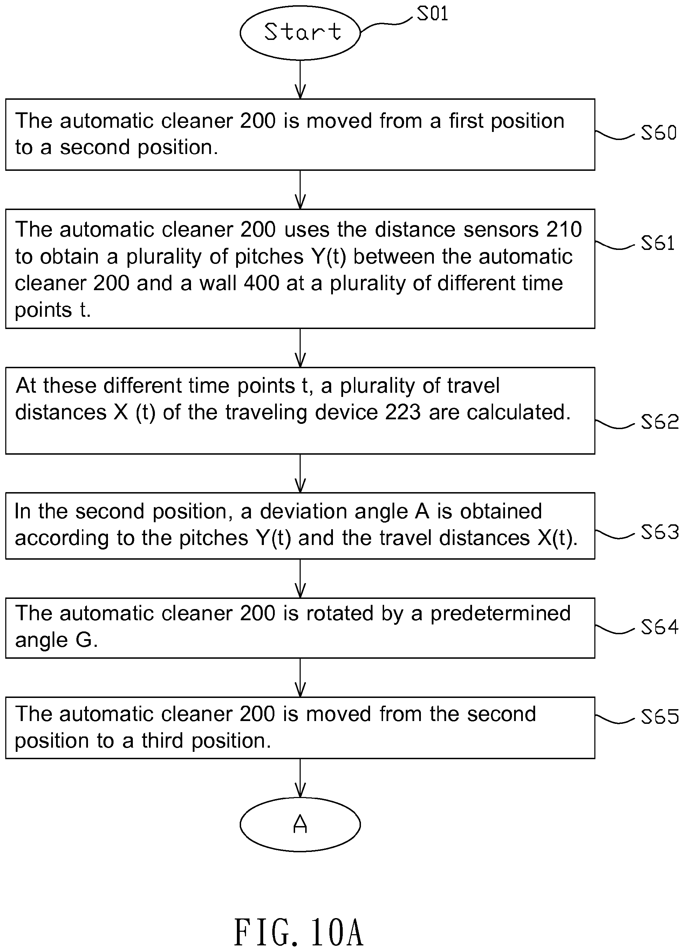

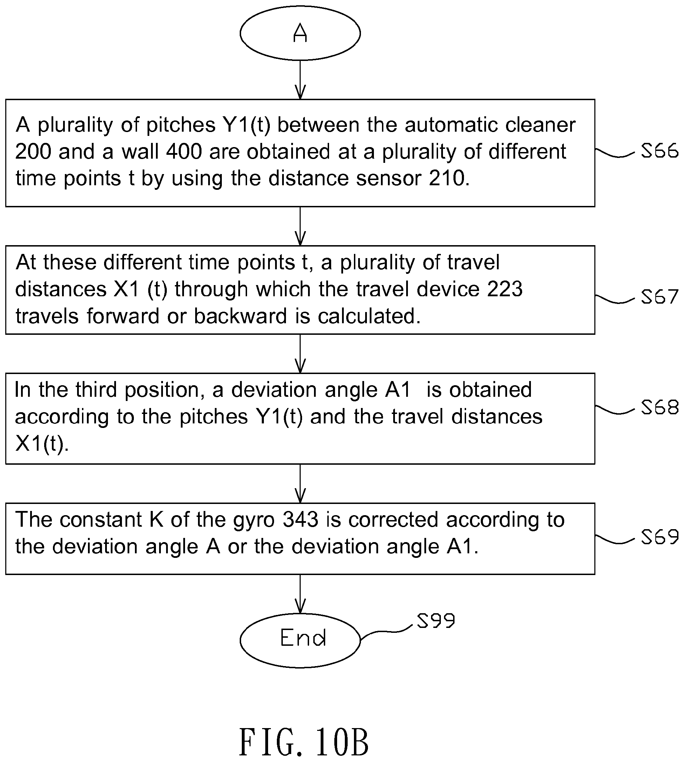

The error of the integration angle obtained by the gyro 343 is related to its constant K. In one embodiment, the constant K of the gyro 343 may also be corrected according to the deviation angle A. Fig. 9A shows a schematic view of a part of an actual path of an automatic cleaner according to another embodiment of the present invention. Fig. 9B shows a schematic view of a part of the actual path of an automatic cleaner according to another embodiment of the present invention. Figs. 10A-10B show a flow chart of a control method which can correct an orientation angle of a gyro according to an embodiment of the present invention. As shown in Figs. 9A and 10A-10B, a control method of an embodiment of the present invention is capable of correcting the gyro, and the control method comprises the following steps.

Step S60: The automatic cleaner 200 is moved from a first position to a second position. As shown in Fig. 9A, the first position may be point P1, and the second position may be point P2.

Step S61: The automatic cleaner 200 uses the distance sensors 210 to obtain a plurality of pitches Y(t) between the automatic cleaner 200 and a wall 400 at a plurality of different time points t.

Step S62: At these different time points t, a plurality of travel distances X(t) of the traveling device 223 are calculated.

Step S63: In the second position, a deviation angle A between the traveling direction of the automatic cleaner 200 and the extending direction of the wall 400 is obtained according to the pitches Y(t) and the travel distances X(t).

Step S64: The automatic cleaner 200 is rotated by a predetermined angle G. In one embodiment, as shown in Fig. 9A, the predetermined angle G may be 360 degrees, so that the orientation of the automatic cleaner 200 is not changed substantially. In another embodiment, as shown in FIG. 9B, the predetermined angle G may be any angle of less than 90 degrees.

Step S65: The automatic cleaner 200 is moved from the second position to a third position. As shown in Fig. 9A, the second position may be point P2, and the third position may be point P3, respectively. In one embodiment, the wheel 231 of the travelling device 223 is rotated backward and the automatic cleaner 200 is moved back to point P5 without changing its orientation. As shown in Fig. 9B, the second position may be point P2, and the third position may be point P4, respectively.

Step S66: A plurality of pitches Y1(t) between the automatic cleaner 200 and a wall 400 are obtained at a plurality of different time points t by using the distance sensor 210.

Step S67: At these different time points t, a plurality of travel distances X1(t) through which the travelling device 223 travels forward or backward is calculated. As shown in Fig. 9A, in one embodiment, when the automatic cleaner 200 travels forward, it moves from point P2 to point P3. In another embodiment, when the automatic cleaner 200 travels backward, it is further moved back from point P2 to point P5 near point P1. In the embodiment of Fig. 9B, the automatic cleaner 200 is moved from point P2 to point P4.

Step S68: In the third position, a deviation angle A1 between the traveling direction of the automatic cleaner 200 and the extending direction of the wall 400 is obtained according to the pitches Y1(t) and the travel distances X1(t).

Step S69: The constant K of the gyro 343 is corrected according to the deviation angle A or the deviation angle A1. For example, in one embodiment, the constant K of the gyro 343 may be corrected by using the following equation.

$$ Knew = \left( 1 + \frac{A1 - A - mod(G, 360)}{G} \right) \times Kold \qquad eq2 $$

where Knew represents the corrected gyro constant; Kold represents the gyros constant before correction; G represents a predetermined angle of rotation of the automatic cleaner 200; A1 represents a deviation angle after the automatic cleaner 200 is rotated; A represents the deviation angle of the automatic cleaner 200 before rotation; and mod (G, 360) represents the remainder function where the dividend is G and the divisor is 360.

In the embodiment of Fig. 9A, since the predetermined angle G is 360 °, the value of mod (G, 360) is zero. In this case, the equation eq2 is: Knew = (1 + (A1-A) / 360) * Kold. In addition, when the predetermined angle G is 30 ° or 390 °, the difference between A1 and A measured in the ideal state is 30 °, so that the error angle caused by the gyro 343 may be represented by the general equation: A1 - A - mod (G, 360). Finally, the gyro constant K is corrected by using the equation eq2. Through the aforementioned control method, a gyro constant of the gyro that is more accurate can be obtained.

In view of the above, according to an embodiment of the present invention, by continuously measuring the pitches Y(t) and the travel distances X(t), the automatic cleaner 200 can obtain the angle deviation A between it and the wall 400 and then correct its orientation angle Q by using the deviation angle A. Accordingly, the path of the automatic cleaner 200 is not shifted away from the desired path. In one embodiment, a ranging laser IC, rather than a LIDAR, may be used. Since the cost of ranging laser IC is lower than a LIDAR, the cost of the automatic cleaner may be reduced. In one embodiment, the automatic cleaner 200 has the advantages of low cost, and high cleaning efficiency and high cleaning coverage. In one embodiment, a technology scheme is proposed which is simpler and less costly than the LIDAR navigation or imaging system identification navigation. In one embodiment, a gyros correction method is also proposed.

These and other embodiments of the present disclosure become readily apparent to those skilled in the art from the above detailed description of preferred embodiments having reference to the attached figures; however, the disclosure is not limited to any particular embodiment(s) disclosed herein. These and other modifications of this invention, which would be obvious to those skilled in the art, are included within the scope of this invention and the terms of the following claims.

**Claims**

1. An automatic cleaner (200), comprising a distance sensor (210), a control module (340) and a travelling device (223), wherein

   the control module (340) has a gyro (343) and is electrically connected to the distance sensor (210) and the travelling device (223),
   the travelling device (223) is used to move the automatic cleaner (200) from a first position (P1) to a second position (P2),
   the distance sensor (210) is used to measure a plurality of pitches (Y(t)) between the automatic cleaner (200) and a wall (400) at a plurality of different time points (t),
   the control module (340) is used to calculate a plurality of travel distances (X(t)) of the travelling device (223) at the different time points (t) and determine, in the second position (P2), a deviation angle (A) between the traveling direction of the automatic cleaner (200) and the extending direction of the wall (400) on the basis of the pitches (Y(t)) and the travel distances (X(t)),
   **characterized in that**
   the distance sensor (210) comprises a laser device emitting a laser beam to measure the pitches (Y(t)),
   the control module (340) is further used to calculate an orientation angle (Q) and correct the orientation angle (Q) according to the deviation angle (A),
   the laser device of the automatic cleaner (200) is used to measure the surrounding environment of the automatic cleaner (200) at different time points so that a plurality of local maps (S0-Sq) are obtained,
   the control module (340) determines a path based on the local maps (S0-Sq) and then controls the automatic cleaner (200) to travel on the path,
   the control module (340) updates a map database based on the local maps (S0-Sq) and stores the map database in a memory of the automatic cleaner (200), wherein in the local maps (S0-Sq) obtained by the laser device, a present local map (S0-Sq) contains partial information unknown by a previous local map (S0-Sq) so that the map database is expanded during the cleaning process.

2. The automatic cleaner (200) according to claim 1, wherein
   the control module (340) builds the map database by not controlling the automatic cleaner (200) to circle around a room before cleaning operation.

3. The automatic cleaner (200) according to claim 1 or 2, wherein

   each of the local maps (S0-Sq) is represented by a two-dimensional array (S0(i, j)), and
   the path is a zigzag path.

4. The automatic cleaner (200) according to anyone of claims 1 to 3, wherein

   the control module (340) is further used to calculate a regression line (L) by linear regression through a set of data points of the travel distances (X(t)) and the pitches (Y(t)), and then obtain the deviation angle (A) from the regression line (L), and
   the control module (340) is further used to correct the orientation angle (Q) according to a first equation: the orientation angle after correction (Q) = (the orientation angle before correction (Q) - the deviation angle (A)).

5. The automatic cleaner (200) according to anyone of claims 1 to 3, wherein the control module (340) is further used to correct the orientation angle (Q) according to a second equation: the orientation angle after correction (Q) = (the orientation angle before correction (Q) - a difference angle (Aa)), and the deviation angle (A) is greater than the difference angle (Aa).

6. The automatic cleaner (200) according to anyone of claims 1 to 3, wherein

   the control module (340) is further used to rotate the automatic cleaner (200) by a predetermined angle (G) and control the travelling device (223) to move the automatic cleaner (200) from the second position (P2) to a third position (P3),

after the automatic cleaner (200) is rotated by the predetermined angle (G), a plurality of another pitches (Y1(t)) between the automatic cleaner (200) and the wall (400) are obtained at a plurality of another different time points (t) by using the distance sensor (210),

after the automatic cleaner is rotated by the predetermined angle (G), a plurality of another travel distances (X1(t)) of the automatic cleaner is calculated at the different time points (t),

in the third position (P3), another deviation angle (A1) between the traveling direction of the automatic cleaner and the extending direction of the wall (400) is determined on the basis of the another pitch (Y1(t)) and the other travel distances (X1(t)), and

the constant (K) of the gyro is corrected according to the deviation angle (A) and the other deviation angle (A1).

7. A controlling method applied to an automatic cleaner (200) comprising a distance sensor (210), a control module (340) having a gyro (343) and a travelling device (223), the controlling method comprising:

moving the automatic cleaner (200) from a first position (P1) to a second position (P2);

using the distance sensor (210) to measure a plurality of pitches (Y(t)) between the automatic cleaner (200) and a wall (400) at a plurality of different time points (t);

using the control module (340) to calculate a plurality of travel distances (X(t)) of the travelling device (223) at the different time points (t);

determining a deviation angle (A) between the traveling direction of the automatic cleaner (200) and the extending direction of the wall (400) based on the pitches (Y(t)) and the travel distances (X(t)) in the second position (P1);

**characterized in that**

the distance sensor (210) comprises a laser device emitting a laser beam to measure the pitches (Y(t)),

and **in that** the controlling method further comprises:

using the control module (340) to calculate an orientation angle (Q);

correcting the orientation angle (Q) according to the deviation angle (A);

using the laser device of the automatic cleaner (200) to measure the surrounding environment of the automatic cleaner (200) at different time points (t) so that a plurality of local maps (S0-Sq) are obtained;

determining a path based on the local maps (S0-Sq) and then controlling the automatic cleaner (200) to travel on the path; and

updating a map database based on the local maps (S0-Sq) and storing the map database in a memory of the automatic cleaner (200), wherein in the local maps (S0-Sq) obtained by the laser device, a present local map (S0-Sq) contains partial information unknown by a previous local map (S0-Sq) so that the map database is expanded during the cleaning process.

8. The controlling method according to claim 7, wherein the step of updating a map database based on the local maps (S0-Sq) comprises the steps of:

building the map database by not controlling the automatic cleaner (200) to circle around a room before cleaning operation.

9. The controlling method according to claim 7 or 8, wherein

each of the local maps (S0-Sq) is represented by a two-dimensional array (S0(i, j)), and
the path is a zigzag path.

10. The controlling method according to claim 7, wherein the step of determining a deviation angle (A) comprises the steps of:

calculating a regression line (L) by linear regression through a set of data points of the travel distances (X(t)) and the pitches (Y(t)), and then obtaining the deviation angle (A) from the regression line (L), and

the step of correcting the orientation angle (Q) according to the deviation angle (A) comprises the step of:

correcting the orientation angle (Q) according to an equation: the orientation angle after correction (Q) = the orientation angle before correction (Q) - a difference angle (Aa), and the deviation angle (A) is greater than the difference angle (Aa).

11. The controlling method according to claim 7, wherein the step of correcting the orientation angle (Q) according to the deviation angle (A) comprises the steps of:

determining whether the orientation angle (Q) has been corrected;

correcting the orientation angle (Q) according to a first equation: the orientation angle after correction (Q) = the orientation angle before correction (Q) - deviation angle (A), if the orientation angle (Q) has not been corrected yet;

determining whether the deviation angle (A) is smaller than a threshold value;

correcting the orientation angle (Q) further according to a second equation: the orientation angle after correction (Q) = the orientation angle before correction (Q) - the difference angle (Aa) smaller than the deviation angle (A), if the orientation angle (Q) has been corrected and the deviation angle (A) is smaller than the threshold value; and

not correcting the orientation angle (Q) if the deviation angle (A) is greater than the threshold value.

12. The controlling method according to claim 7 further comprising the steps of:

rotating the automatic cleaner (200) by a predetermined angle (G);

moving the automatic cleaner (200) from the second position (P2) to a third position (P3);

using the distance sensor (210) to obtain a plurality of another pitches (Y1(t)) between the automatic cleaner (200) and the wall (400) at a plurality of another different time points (t) after the automatic cleaner (200) is rotated by the predetermined angle G;

calculating a plurality of another travel distances X1(t) of the automatic cleaner at the different time points t after the automatic cleaner is rotated by the predetermined angle (G);

determining another deviation angle (A1) between the traveling direction of the automatic cleaner (200) and the extending direction of the wall (400) based on the another pitch (Y1(t)) and the another travel distances (X1(t)) in the third position (P3); and

correcting the constant (K) of the gyro (343) according to the deviation angle (A) and the another deviation angle (A1).

13. The controlling method according to claim 12, wherein

the predetermined angle (G) is 360 degrees,

the step of moving the automatic cleaner (200) from the first position (P1) to the second position (P2) comprises the step of making the travelling device (223) travel forward, and

the step of moving the automatic cleaner (200) from the second position (P2) to the third position (P3) comprises the step of making the travelling device (223) travel backward.

14. The controlling method according to claim 7, wherein the step of correcting the orientation angle (Q) according to the deviation angle (A) comprises the step of correcting the constant (K) of the gyro (343).

## Patentansprüche

1. Automatischer Reiniger (200), der einen Abstandssensor (210), ein Steuerungsmodul (340) und eine Bewegungsvorrichtung (223) umfasst, wobei das Steuerungsmodul (340) ein Kreiselgerät (343) aufweist und elektrisch mit dem Abstandssensor (210) und der Bewegungsvorrichtung (223) verbunden ist,

wobei die Bewegungsvorrichtung (223) verwendet wird, um den automatischen Reiniger (200) von einer ersten Position (P1) zu einer zweiten Position (P2) zu bewegen,

wobei der Abstandssensor (210) verwendet wird, um eine Vielzahl an Abständen (Y(t)) zwischen dem automatischen Reiniger (200) und einer Wand (400) bei einer Vielzahl verschiedener Zeitpunkte (t) zu messen, wobei das Steuerungsmodul (340) verwendet wird, um eine Vielzahl an Bewegungsdistanzen (X(t)) der Bewegungsvorrichtung (223) zu verschiedenen Zeitpunkten (t) zu berechnen und in der zweiten Position (P2) einen Abweichungswinkel (A) zwischen der Bewegungsrichtung des automatischen Reinigers (200) und der Erstreckungsrichtung der Wand (400) auf Basis der Abstände (Y(t)) und der Bewegungsdistanzen (X(t)) zu bestimmen,

**dadurch gekennzeichnet, dass**

der Abstandssensor (210) eine Laservorrichtung umfasst, die einen Laserstrahl emittiert, um die Abstände (Y(t)) zu messen,

wobei das Steuerungsmodul (340) ferner dazu verwendet wird, einen Orientierungswinkel (Q) zu berechnen und den Orientierungswinkel (Q) gemäß dem Abweichungswinkel (A) zu korrigieren,

wobei die Laservorrichtung des automatischen Reinigers (200) verwendet wird, um die Umgebung des automatischen Reinigers (200) zu verschiedenen Zeitpunkten zu messen, so dass eine Vielzahl an lokalen Karten (S0-Sq) erhalten wird,

wobei das Steuerungsmodul (340) einen Pfad basierend auf den lokalen Karten (S0-Sq) bestimmt und dann den automatischen Reiniger (200) steuert, sodass er sich auf dem Pfad bewegt,

wobei das Steuerungsmodul (340) eine Datenbasis basierend auf den lokalen Karten (S0-Sq) erneuert und die Datenbasis an Karten in einem Speicher des automatischen Reinigers (200) speichert, wobei bei den lokalen Karten (S0-Sq), die von der Laservorrichtung erhalten werden, eine aktuelle lokale Karte (S0-Sq) partielle Informationen enthält, die aus einer vorherigen lokalen Karte (S0-Sq) nicht bekannt sind, so dass die Datenbasis an Karten während des Reinigungsprozesses erweitert wird.

2. Automatische Reiniger (200) gemäß Anspruch 1, bei welchem das Steuerungsmodul (340) die Datenbasis an Karten aufbaut, indem es den automatischen Reiniger (200) nicht steuert, vor einem Reinigungsprozess einen Raum abzufahren.

3. Automatische Reiniger (200) gemäß Anspruch 1 oder 2, bei welchem jede der lokalen Karten (S0-Sq) durch ein zweidimensionales Datenfeld (S0(i,j)) repräsentiert wird und

der Pfad ein Zickzackpfad ist.

4. Automatische Reiniger (200) gemäß einem der Ansprüche 1 bis 3, bei welchem

das Steuerungsmodul (340) ferner verwendet wird, um durch lineare Regression durch einen Satz an Datenpunkten der Bewegungsdistanzen (X(t)) und der Abstände (Y(t)) eine Regressionslinie (L) zu berechnen, und dann aus der Regressionslinie (L) den Abweichungswinkel (A) zu erhalten, und das Steuerungsmodul (340) ferner dazu verwendet wird, den Orientierungswinkel (Q) gemäß einer ersten Gleichung zu korrigieren: der Orientierungswinkel nach der Korrektur (Q) = (der Orientierungswinkel vor der Korrektur (Q) - der Abweichungswinkel (A)).

5. Automatischer Reiniger (200) gemäß einem der Ansprüche 1 bis 3, bei welchem das Steuerungsmodul (340) ferner dazu verwendet wird, den Orientierungswinkel (Q) gemäß einer zweiten Gleichung zu korrigieren: der Orientierungswinkel nach der Korrektur (Q) = (der Orientierungswinkel vor der Korrektur (Q) - ein Differenzwinkel (Aa)), und der Abweichungswinkel (A) ist größer als der Differenzwinkel (Aa).

6. Automatischer Reiniger (200) gemäß einem der Ansprüche 1 bis 3, bei welchem das Steuerungsmodul (340) ferner dazu verwendet wird, den automatischen Reiniger (200) um einen vorbestimmten Winkel (G) zu drehen und die Bewegungsvorrichtung (223) zu steuern, den automatischen Reiniger (200) von der zweiten Position (P2) zu einer dritten Position (P3) zu bewegen,

wobei, nachdem der automatische Reiniger (200) um den vorbestimmten Winkel (G) gedreht wurde, eine Vielzahl an anderen Abständen (Y1 (t)) zwischen dem automatischen Reiniger (200) und der Wand (400) bei einer Vielzahl an anderen Zeitpunkten (t) durch den Gebrauch des Abstandssensors (210) erhalten wird,

wobei, nachdem der automatische Reiniger um den vorbestimmten Winkel (G) gedreht wurde, eine Vielzahl an anderen Bewegungsdistanzen (X1 (t)) des automatischen Reinigers zu den verschiedenen Zeitpunkten (t) berechnet wird,

wobei in der dritten Position (P3) ein anderer Abweichungswinkel (A1) zwischen der Bewegungsrichtung des automatischen Reinigers und der Erstreckungsrichtung der Wand (400) auf Basis des anderen Abstands (Y1 (t)) und der anderen Bewegungsdistanzen (X1(t)) bestimmt wird und

die Konstante (K) des Kreiselgeräts gemäß des Abweichungswinkels (A) und des anderen Abweichungswinkels (A1) korrigiert wird.

7. Steuerungsverfahren, das bei einem automatischen Reiniger (200) angewandt wird, der einen Abstandssensor (210), ein Steuerungsmodul (340), das ein Kreiselgerät (343) aufweist, und eine Bewegungsvorrichtung (223) umfasst, wobei das Steuerungsverfahren umfasst:

Bewegen des automatischen Reinigers (200) von einer ersten Position (P1) zu einer zweiten Position (P2),
Verwenden des Abstandssensors (210), um eine Vielzahl an Abständen (Y(t)) zwischen dem automatischen Reiniger (200) und einer Wand (400) bei einer Vielzahl verschiedener Zeitpunkte (t) zu messen,
Verwenden des Steuerungsmoduls (340), um eine Vielzahl an Bewegungsdistanzen (X(t)) der Bewegungsvorrichtung (223) zu verschiedenen Zeitpunkten (t) zu berechnen,
Bestimmen eines Abweichungswinkels (A) zwischen der Bewegungsrichtung des automatischen Reinigers (200) und der Erstreckungsrichtung der Wand (400) auf Basis der Abstände (Y(t)) und der Bewegungsdistanzen (X(t)) in der zweiten Position (P1),
**dadurch gekennzeichnet, dass**
der Abstandssensor (210) eine Laservorrichtung umfasst, die einen Laserstrahl emittiert, um die Abstände (Y(t)) zu messen,

und dass das Steuerungsverfahren ferner umfasst:

Verwenden des Steuerungsmoduls (340), um einen Orientierungswinkel (Q) zu berechnen,

Korrigieren des Orientierungswinkels (Q) gemäß dem Abweichungswinkel (A),

Verwenden der Laservorrichtung des automatischen Reinigers (200), um die Umgebung des automatischen Reinigers (200) zu verschiedenen Zeitpunkten (t) zu messen, so dass eine Vielzahl an lokalen Karten (S0-Sq) erhalten wird,

Bestimmen eines Pfades, basierend auf den lokalen Karten (S0-Sq), und dann Steuern des automatischen Reinigers (200), sodass er sich auf dem Pfad bewegt, und

Erneuern einer Datenbasis, basierend auf den lokalen Karten (S0-Sq), und Speichern der Datenbasis an Karten in einem Speicher des automatischen Reinigers (200), wobei in den lokalen Karten (S0-Sq), die von der Laservorrichtung erhalten werden, eine aktuelle lokale Karte (S0-Sq) partielle Informationen enthält, die aus einer vorherigen lokalen Karte (S0-Sq) nicht bekannt sind, so dass die Datenbasis an Karten während des Reinigungsprozesses erweitert wird.

8. Steuerungsverfahren gemäß Anspruch 7, bei welchem der Schritt des Erneuerns einer Datenbasis an Karten basierend auf den lokalen Karten (S0-Sq) die Schritte umfasst:
Aufbauen der Datenbasis an Karten, dadurch dass der automatische Reiniger (200) nicht gesteuert wird, vor einem Reinigungsprozess einen Raum abzufahren.

9. Steuerungsverfahren gemäß Anspruch 7 oder 8, bei welchem
jede der lokalen Karten (S0-Sq) durch ein zweidimensionales Datenfeld (S0(i,j)) repräsentiert wird und
der Pfad ein Zickzackpfad ist.

10. Steuerungsverfahren gemäß Anspruch 7, bei welchem der Schritt des Bestimmens eines Abweichungswinkels (A) die Schritte umfasst:

Berechnen einer Regressionslinie (L) durch lineare Regression durch einen Satz an Datenpunkten der Bewegungsdistanzen (X(t)) und der Abstände (Y(t)) und dann Erhalten des Abweichungswinkels (A) aus der Regressionslinie (L), und

den Schritt des Korrigierens des Orientierungswinkels (Q) gemäß dem Abweichungswinkel (A), den Schritt umfassend:

Korrigieren des Orientierungswinkels (Q) gemäß einer Gleichung: der Orientierungswinkel nach der Korrektur (Q) = der Orientierungswinkel vor der Korrektur (Q) - ein Differenzwinkel (Aa), und der Abweichungswinkel (A) ist größer als der Differenzwinkel (Aa).

11. Steuerungsverfahren gemäß Anspruch 7, bei welchem der Schritt des Korrigierens des Orientierungswinkels (Q) gemäß dem Abweichungswinkel (A) die Schritte umfasst:

Bestimmen, ob der Orientierungswinkel (Q) korrigiert worden ist,

Korrigieren des Orientierungswinkels (Q) gemäß einer ersten Gleichung:

der Orientierungswinkel nach der Korrektur (Q) = der Orientierungswinkel vor der Korrektur (Q) - der Abweichungswinkel (A), wenn der Orientierungswinkel (Q) noch nicht korrigiert worden ist,

Bestimmen, ob der Abweichungswinkel (A) kleiner als ein Schwellwert ist, Korrigieren des Orientierungswinkels (Q) ferner gemäß einer zweiten Gleichung: der Orientierungswinkel nach der Korrektur (Q) = der Orientierungswinkel vor der Korrektur (Q) - der Differenzwinkel (Aa), der kleiner als der Abweichungswinkel (A) ist, wenn der Orientierungswinkel (Q) korrigiert worden ist und der Abweichungswinkel (A) kleiner als der Schwellwert ist, und

kein Korrigieren des Orientierungswinkels (Q), wenn der Abweichungswinkel (A) größer als der Schwellwert ist.

12. Steuerungsverfahren gemäß Anspruch 7, ferner die Schritte umfassend:

Drehen des automatischen Reinigers (200) um einen vorbestimmten Winkel (G);

Bewegen des automatischen Reinigers (200) von der zweiten Position (P2) zu einer dritten Position (P3);

Verwenden das Abstandssensors (210), um eine Vielzahl an anderen Abständen (Y1(t)) zwischen dem automatischen Reiniger (200) und der Wand (400) bei einer Vielzahl an anderen Zeitpunkten (t) zu erhalten, nachdem der automatische Reiniger (200) um den vorbestimmten Winkel G gedreht worden ist;

Berechnen einer Vielzahl an anderen Bewegungsdistanzen (X1(t)) des automatischen Reinigers zu den verschiedenen Zeitpunkten (t), nachdem der automatische Reiniger um den vorbestimmten Winkel (G) gedreht worden ist;

Bestimmen eines anderen Abweichungswinkels (A1) zwischen der Bewegungsrichtung des automatischen Reinigers (200) und der Erstreckungsrichtung der Wand (400) auf Basis des anderen Abstands (Y1(t)) und der anderen Bewegungsdistanzen (X1(t)), in der dritten Position (P3); und

Korrigieren der Konstante (K) des Kreiselgeräts (343) gemäß des Abweichungswinkels (A) und des anderen Abweichungswinkels (A1).

13. Steuerungsverfahren gemäß Anspruch 12, bei welchem
der vorbestimmte Winkel (G) 360 Grad beträgt,
der Schritt des Bewegens des automatischen Reinigers (200) von der ersten Position (P1) zu der zweiten Position (P2) den Schritt umfasst, die Bewegungsvorrichtung (223) dazu zu bringen, sich vorwärts zu bewegen, und der Schritt des Bewegens des automatischen Reinigers (200) von der zweiten Position (P2) zu der dritten Position (P3) den Schritt umfasst, die Bewegungsvorrichtung (223) dazu zu bringen, sich rückwärts zu bewegen.

14. Steuerungsverfahren gemäß Anspruch 7, bei welchem der Schritt des Korrigierens des Orientierungswinkels (Q) gemäß dem Abweichungswinkel (A) den Schritt umfasst, die Konstante (K) des Kreiselgeräts (343) zu korrigieren.


**Revendications**

1. Robot nettoyeur (200), comprenant un capteur de distance (210), un module de commande (340) et un dispositif mobile (223), dans lequel
le module de commande (340) comporte un gyro (343) et est raccordé électriquement au capteur de distance (210) et au dispositif mobile (223),
le dispositif mobile (223) est utilisé pour déplacer le robot nettoyeur (200) d'une première position (P1) vers une deuxième position (P2),
le capteur de distance (210) est utilisé pour mesurer une pluralité de pas (Y(t)) entre le robot nettoyeur (200) et une paroi (400) à une pluralité d'instants (t) différents,
le module de commande (340) est utilisé pour calculer une pluralité de distances de déplacement (X(t)) du dispositif mobile (223) aux différents instants (t) et déterminer, dans la deuxième position (P2), un angle d'écart (A) entre la direction de déplacement du robot nettoyeur (200) et la direction d'extension de la paroi (400) en fonction des pas (Y(t)) et des distances de déplacement (X(t)),
**caractérisé en ce que**
le capteur de distance (210) comprend un dispositif à laser émettant un faisceau laser pour mesurer les pas (Y(t)),
le module de commande (340) est utilisé en outre pour calculer un angle d'orientation (Q) et corriger l'angle d'orientation (Q) en fonction de l'angle d'écart (A),
le dispositif à laser du robot nettoyeur (200) est utilisé pour mesurer les abords du robot nettoyeur (200) à différents instants de manière à obtenir une pluralité de cartes locales (S0-Sq),
le module de commande (340) détermine un chemin en fonction des cartes locales (S0-Sq) et commande ensuite le robot nettoyeur (200) pour qu'il suive le chemin,
le module de commande (340) met à jour une base de données de cartes à partir des cartes locales (S0-Sq) et enregistre la base de données de cartes dans une mémoire du robot nettoyeur (200), dans lequel dans les cartes locales (S0-Sq) obtenues par le dispositif à laser, une carte locale actuelle (S0-Sq) contient des informations partielles inconnues d'une carte locale précédente (S0-Sq) de sorte que la base de données de cartes s'agrandit au cours du processus de nettoyage.

2. Robot nettoyeur (200) selon la revendication 1, dans lequel
le module de commande (340) construit la base de données de cartes en ne commandant pas le robot nettoyeur (200) pour qu'il fasse le tour d'une pièce avant une opération de nettoyage.

3. Robot nettoyeur (200) selon la revendication 1 ou 2, dans lequel
chacune des cartes locales (S0-Sq) est représentée par une matrice bidimensionnelle (S0(i,j)), et
le chemin est un chemin en zigzag.

**4.** Robot nettoyeur (200) selon l'une quelconque des revendications 1 à 3, dans lequel
le module de commande (340) est utilisé en outre pour calculer une ligne de régression (L) par régression linéaire sur un ensemble de points de données des distances de déplacement (X(t)) et des pas (Y(t)), et obtenir ensuite l'angle d'écart (A) à partir de la ligne de régression (L), et
le module de commande (340) est utilisé en outre pour corriger l'angle d'orientation (Q) selon une première équation : angle d'orientation après correction (Q) = (angle d'orientation avant correction (Q) - angle d'écart (A)).

**5.** Robot nettoyeur (200) selon l'une quelconque des revendications 1 à 3, dans lequel le module de commande (340) est utilisé en outre pour corriger l'angle d'orientation (Q) selon une seconde équation : angle d'orientation après correction (Q) = (angle d'orientation avant correction (Q) - angle de différence (Aa)) et l'angle d'écart (A) est supérieur à l'angle de différence (Aa).

**6.** Robot nettoyeur (200) selon l'une quelconque des revendications 1 à 3, dans lequel
le module de commande (340) est utilisé en outre pour faire faire pivoter le robot nettoyeur (200) d'un angle prédéterminé (G) et commander le dispositif mobile (223) pour qu'il déplace le robot nettoyeur (200) de la deuxième position (P2) vers une troisième position (P3),
après que le robot nettoyeur (200) a pivoté de l'angle prédéterminé (G), une pluralité d'autres pas (Y1(t)) entre le robot nettoyeur (200) et la paroi (400) sont obtenus à une pluralité d'autres instants (t) différents au moyen du capteur de distance (210),
après que le robot nettoyeur (200) a pivoté de l'angle prédéterminé (G), une pluralité d'autres distances de déplacement (X1(t)) du robot nettoyeur est calculée aux différents instants (t),
dans la troisième position (P3), un autre angle d'écart (A1) entre la direction de déplacement du robot nettoyeur et la direction d'extension de la paroi (400) est déterminé en fonction de l'autre pas (Y1(t)) et des autres distances de déplacement (X1(t)), et
la constante (K) du gyro est corrigée en fonction de l'angle d'écart (A) et de l'autre angle d'écart (A1).

**7.** Procédé de commande appliqué à un robot nettoyeur (200) comprenant un capteur de distance (210), un module de commande (340) comportant un gyro (343) et un dispositif mobile (223), le procédé de commande comprenant:

le déplacement du robot nettoyeur (200) d'une première position (P1) vers une deuxième position (P2);
l'utilisation du capteur de distance (210) pour mesurer une pluralité de pas (Y(t)) entre le robot nettoyeur (200) et une paroi (400) à une pluralité d'instants (t) différents,
l'utilisation du module de commande (340) pour calculer une pluralité de distances de déplacement (X(t)) du dispositif mobile (223) aux différents instants (t);
la détermination d'un angle d'écart (A) entre la direction de déplacement du robot nettoyeur (200) et la direction d'extension de la paroi (400) en fonction des pas (Y(t)) et des distances de déplacement (X(t)) dans la deuxième position (P1);
**caractérisé en ce que**
le capteur de distance (210) comprend un dispositif à laser émettant un faisceau laser pour mesurer les pas (Y(t)), et **en ce que** le procédé de commande comprend en outre:

l'utilisation du module de commande (340) pour calculer un angle d'orientation (Q);
la correction de l'angle d'orientation (Q) en fonction de l'angle d'écart (A);
l'utilisation du dispositif à laser du robot nettoyeur (200) pour mesurer les abords du robot nettoyeur (200) à différents instants (t) de manière à obtenir une pluralité de cartes locales (S0-Sq);
la détermination d'un chemin en fonction des cartes locales (S0-Sq) puis la commande du robot nettoyeur (200) pour qu'il suive le chemin; et
la mise à jour d'une base de données de cartes à partir des cartes locales (S0-Sq) et l'enregistrement de la base de données de cartes dans une mémoire du robot nettoyeur (200), dans lequel dans les cartes locales (S0-Sq) obtenues par le dispositif à laser, une carte locale actuelle (S0-Sq) contient des informations partielles inconnues d'une carte locale précédente (S0-Sq) de sorte que la base de données de cartes s'agrandit au cours du processus de nettoyage.

**8.** Procédé de commande selon la revendication 7, dans lequel l'étape de mise à jour d'une base de données de cartes à partir des cartes locales (S0-Sq) comprend les étapes suivantes: construction de la base de données de cartes en ne commandant pas le robot nettoyeur (200) pour qu'il fasse le tour d'une pièce avant une opération de nettoyage.

**9.** Procédé de commande selon les revendications 7 ou 8, dans lequel chacune des cartes locales (S0-Sq) est représentée par une matrice bidimensionnelle (S0(i,j)), et
le chemin est un chemin en zigzag.

**10.** Procédé de commande selon la revendication 7, dans lequel l'étape de détermination d'un angle d'écart (A) comprend les étapes suivantes:

calcul d'une ligne de régression (L) par régression linéaire sur un ensemble de points de données des distances de déplacement (X(t)) et des pas (Y(t)), puis obtention de l'angle d'écart (A) à partir de la ligne de régression (L), et l'étape de correction de l'angle d'orientation (Q) en fonction de l'angle d'écart (A) comprend l'étape suivante:
correction de l'angle d'orientation (Q) selon une équation : angle d'orientation après correction (Q) = angle d'orientation avant correction (Q) - angle de différence (Aa), et l'angle d'écart (A) est supérieur à l'angle de différence (Aa).

**11.** Procédé de commande selon la revendication 7, dans lequel l'étape de correction de l'angle d'orientation (Q) en fonction de l'angle d'écart (A) comprend les étapes suivantes:

détermination du fait que l'angle d'orientation (Q) a été corrigé ou non;
correction de l'angle d'orientation (Q) selon une première équation : angle d'orientation après correction (Q) = angle d'orientation avant correction (Q) - angle d'écart (A), si l'angle d'orientation (Q) n'a pas encore été corrigé;
détermination du fait que l'angle d'écart (A) est inférieur ou non à une valeur seuil;
correction de l'angle d'orientation (Q) en coutre selon une seconde équation :

angle d'orientation après correction (Q) = angle d'orientation avant correction (Q) - angle de différence (Aa) inférieur à l'angle d'écart (A), si l'angle d'orientation (Q) a été corrigé et l'angle d'écart (A) est inférieur à la valeur seuil; et
la non-correction de l'angle d'orientation (Q) si l'angle d'écart (A) est supérieur à la valeur seuil.

**12.** Procédé de commande selon la revendication 7, comprenant en outre les étapes suivantes:

pivotement du robot nettoyeur (200) d'un angle prédéterminé (G);
déplacement du robot nettoyeur (200) de la deuxième position (P2) vers une troisième position (P3);
utilisation du capteur de distance (210) pour obtenir une pluralité d'autres pas (Y1(t)) entre le robot nettoyeur (200) et la paroi (400) à une pluralité d'autres instants (t) différents après que le robot nettoyeur (200) a pivoté de l'angle prédéterminé (G);
calcul d'une pluralité d'autres distances de déplacement (X1(t)) du robot nettoyeur aux différents instants (t) après que le robot nettoyeur a pivoté de l'angle prédéterminé (G);
détermination d'un autre angle d'écart (A1) entre la direction de déplacement du robot nettoyeur (200) et la direction d'extension de la paroi (400) en fonction de l'autre pas (Y1(t)) et des autres distances de déplacement (X1(t)) dans la troisième position (P3); et
correction de la constante (K) du gyro (343) en fonction de l'angle d'écart (A) et de l'autre angle d'écart (A1).

**13.** Procédé de commande selon la revendication 12, dans lequel
l'angle prédéterminé (G) mesure 360 degrés,
l'étape de déplacement du robot nettoyeur (200) de la première position (P1) vers la deuxième position (P2) comprend l'étape consistant à faire avancer le dispositif mobile (223), et
l'étape de déplacement du robot nettoyeur (200) de la deuxième position (P2) vers la troisième position (P3) comprend l'étape consistant à faire reculer le dispositif mobile (223).

**14.** Procédé de commande selon la revendication 7, dans lequel l'étape de correction de l'angle d'orientation (Q) en fonction de l'angle d'écart (A) comprend l'étape de correction de la constante (K) du gyro (343).

FIG.1 (Prior art)

FIG. 2A

# FIG. 2B

FIG. 2C

FIG. 3

FIG. 4

FIG. 5

Start — S01

The distance sensors 210 are used to obtain a plurality of pitches Y(t) at a plurality of different time points t. — S02

The travel distances X(t) of the traveling device 223 are calculated. — S04

A deviation angle A is obtained according to the pitches Y(t) and the travel distances X(t). — S06

S08

whether the orientation angle Q has been corrected? — S82

Yes →

The orientation angle Q is corrected. Q = ( Q - A) — S84

No ↓

the deviation angle A < a threshold value Th? — S85

Yes →

The orientation angle Q is slightly corrected. Q = (Q − Aa), Aa<A. — S86

No ↓

The orientation angle Q has not been corrected. — S87

FIG. 6

FIG. 7

Start _S01

The automatic cleaner 200 is started to find a start point M0. _S20

The automatic cleaner 200 starts walking according to the control method of the embodiment of Fig. 6. _S22

The surrounding environment of the automatic cleaner 200 is measured by a plurality of distance sensors 210 at different time points to obtain a plurality of partial maps S0-Sq. _S24

The automatic cleaner 200 determines the zigzag path based on the measured local maps S0-Sq and continues to travel on the zigzag path. _S26

Based on the measured local maps S0-Sq, the map database is updated and the map database is stored in a memory 345 of the automatic cleaner 200. _S28

End _S99

FIG. 8

FIG. 9A

FIG. 9B

Start — S01

The automatic cleaner 200 is moved from a first position to a second position. — S60

The automatic cleaner 200 uses the distance sensors 210 to obtain a plurality of pitches Y(t) between the automatic cleaner 200 and a wall 400 at a plurality of different time points t. — S61

At these different time points t, a plurality of travel distances X (t) of the traveling device 223 are calculated. — S62

In the second position, a deviation angle A is obtained according to the pitches Y(t) and the travel distances X(t). — S63

The automatic cleaner 200 is rotated by a predetermined angle G. — S64

The automatic cleaner 200 is moved from the second position to a third position. — S65

A

FIG. 10A

A

↓

A plurality of pitches Y1(t) between the automatic cleaner 200 and a wall 400 are obtained at a plurality of different time points t by using the distance sensor 210.          S66

↓

At these different time points t, a plurality of travel distances X1 (t) through which the travel device 223 travels forward or backward is calculated.          S67

↓

In the third position, a deviation angle A1 is obtained according to the pitches Y1(t) and the travel distances X1(t).          S68

↓

The constant K of the gyro 343 is corrected according to the deviation angle A or the deviation angle A1.          S69

↓

End          S99

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7515991 B2
- US 20060217854 A1
- US 5804942 A
- US 20050251312 A1
- US 20050237388 A1
- WO 2016148743 A1